# EUROPEAN PATENT SPECIFICATION

(11) **EP 2 710 776 B1**
(45) Date of publication and mention of the grant of the patent: **30.11.2016**
(21) Application number: 11754848.7
(22) Date of filing: 23.08.2011
(51) Int. Cl.: H04L 29/06, G06F 21/62, H04L 29/08, H04W 12/02

(54) **ANONYMOUS SIGNALLING**
ANONYME SIGNALISIERUNG
SIGNALISATION ANONYME

(30) Priority: 16.05.2011 US 201161486509 P
(43) Date of publication of application: 26.03.2014
(73) Proprietor: Telefonaktiebolaget LM Ericsson (publ), 164 83 Stockholm (SE)
(72) Inventor: DANIELSSON FAN, Xing, S-224 74 Lund (SE); PERSSON, Patrik, S-222 369 Lund (SE); YUAN, Song, 24733 Södra Sandby (SE); PERSSON, Per, S-247 34 Södra Sandby (SE)
(74) Representative: Ericsson
(86) International application number: PCT/EP2011/064473
(87) International publication number: WO 2012/155994

(56) References cited:
- US-A1- 2004 117 661
- US-A1- 2004 117 818
- JENNINGS CISCO C: "Architecture and API Requirements for RTC Web; draft-jennings-rtcweb-api-00.txt", ARCHITECTURE AND API REQUIREMENTS FOR RTC WEB; DRAFT-JENNINGS-RTCWEB-API-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 March 2011 (2011-03-08), pages 1-21, XP015074495, [retrieved on 2011-03-08]

## Description

### TECHNICAL FIELD

Disclosed herein is a method for facilitating anonymous audio and video communication via web browsers.

### BACKGROUND

The use of voice, audio and video communication over the internet is ever increasing, and programs for enabling such communication typically referred to as Voice over Internet Protocol, VoIP, are widely used. Most services are no longer providing only voice communication, but include multimedia sessions, video communication, chat, etc. It is possible to perform such communication in a browser, e.g. by using a plug-in program such as Skype or Flash, which each have millions of users.

A standardization effort known as RTC-Web, Real Time Communication-Web, is picking up pace. The RTC-Web is based on evolved web technology, and will facilitate voice and video communication directly from a web browser, without the need for any plug-ins.

The RTC-Web approach requires an "out-of-band" signalling channel for establishing sessions. This channel is typically implemented using a web service, however, the exact details are not specified within the RTC-Web framework. The signalling channels passes messages between browsers, handles details such as media formats, adding/removing media stream, etc.

Using a web browser to establish a communication typically requires the user to login to a server and exchange some initial information. A server back-end, maintaining user names and passwords, and possibly more information, is thus required. This backend is not only complex to administer but could also be a target for intrusion attempts, such as seen by recent attacks to the Sony PlayStation Network.

US 2004/0117661 A1 describes a method for secure communication of information in a communication network that may comprise acquiring a security code from a second communication device by a first communication device and receiving media containing the security code such as a pin code from the first communication device. The security code may be translated to an IP address corresponding to the second communication device. The received media may be routed to the second communication device based on the IP address of the second communication device.

The above document discloses uni-directional push communication from a first to a second user which does not rely on establishing a bi-directional signalling channel between the two users. In the terminology of claim 1 a second user willing to receive pushed content establishes a communication channel with the server and obtains a temporary unique code which he shares with other users including a first user. The first user pushes content to the second user by sending the content together with the unique code to the server which forwards the content to the second user by translating the unique code to the IP address of the second user. An end-to-end bi-directional signalling channel between the first and the second user is not established. In fact this is discouraged by the above document according to which the first user who sends the push content should stay unaware of the IP address of the second user and is enabled to push content to the second user only during the lifetime of the temporary unique code. In addition no hint is provided for the specific mechanism of establishing two unidirectional signalling channels and pairing their unique identifiers at the server.

US 2004/0117818 A1 discloses a method for establishing a communication pathway for subsequent media exchanges between a television display in a first home and storage that contains media in a second home. The method comprises securely receiving address correlation information associated with the television display in the first home and securely receiving address correlation information associated with the storage in the second home.

JENNINGS CISCO C: "Architecture and API Requirements for RTC Web; draft-jennings-rtcweb-api-OO.txt", ARCHITECTURE AND API REQUIREMENTS FOR RTC WEB; DRAFT-JENNINGS-RTCWEB-API-OO.TXT, INTERNET ENGINEERING TASK FORCE. IETF; STANDARD WORKING DRAFT, INTERNET SOCIETY (ISOC) 4. RUE DES FALAISES CH-1205 GENEVA; 2011-03-08; provides an internet draft for the standard on Real Time Communication-Web. This document proposes several requirements to be met by a communication protocol for sending media between two browsers.

### SUMMARY

It is therefore an object of the present invention to provide a peer to peer communication system without requiring a user to log into a server maintaining a database of user information.

According to the present invention, a method for facilitating anonymous audio and video communication between at least a first web browser and a second web browser, such as between at least a first user using a first web browser and at least a second user using a second web browser, via a server is provided according to claim 1. There is moreover provided a web based system according to claim 8.

The present invention relates to different aspects including the method described above and in the following, corresponding devices, systems, and products, each yielding one or more of the benefits and advantages described in connection with one of the above-mentioned aspects, and each having one or more embodiments corresponding to the embodiments described in connection with at least one of the above-mentioned aspects.

It is an advantage of the above-described method that a first user using a web browser to establish a communication connection with a second user may establish the connection without having to login to a server and exchange initial information, such as user names and passwords, to be allowed access. Thereby, also no server back-end is required to maintain user names, passwords, and possibly more information, such as credit card or other payment information. It is an advantage of facilitating communication without using a server back-end as the server back-end is complex to administer and as a server back-end may be a target for intrusion attempts.

It is a further advantage of the present invention that two or more users may communicate via the web browsers regardless of the presence of specific plug-in programs, so that, for example, two users may communicate without having the same software plug-in installed on their respective communication device.

Preferably, the at least first web browser and the second web browser facilitate voice and video communication using an "out-of-band" signalling channel, such as by the first web browser and the second web browser implementing an RTC-Web standard.

The web browser may be accessed via any means generally capable of accessing web browsers, such as from any communication device, such as computers, such as mobile terminals, e.g. mobile telephones, pagers, communicators, electronic organisers, smart phones, personal digital assistants (PDAs), handheld computers, tablet computers, etc.

The signalling channel may be identified arbitrarily by assigning a universally unique identifier (UUID) or a random number for the unique identifier. It is an advantage of using a UUID or a random number for identifying the signalling channel(s) as such unique identifiers are hard-to-guess identifiers and unlikely to be hacked.

Preferably, the unique identifier is stored temporarily at the server. The signalling channel may be reclaimed in that the first unique identifier is deleted from the server upon connection of the first and the second web browser, that is, as soon as the connection is established, and only the signalling channel is maintained by the server. In a preferred embodiment of the present invention, the first unique identifier is deleted from the server upon a first termination of the connection by the first and/or the second user. Thereby, the server maintains the first unique identifier during the call. Thus, the signalling channel may handle further requests and details, e.g. such as handling media format, adding/removing media streams, etc. Additionally, the first unique identifier may be deleted from the server upon reaching a timeout before a connection between the at least first and second web browsers is established.

Thus, according to the present invention, it is not necessary to provide a fixed signalling channel assigned to a specific user, and likewise, it is not necessary to provide a unique identifier assigned to a specific channel or a specific user. The establishment and allocation of signalling channels to users may be dynamic processes and each new established signalling channel may be given a new unique identifier.

Preferably, the signalling channel is a bi-directional signalling channel. The bi-directional signalling channel may be implemented in any known manner. In one embodiment, a first bi-directional channel may be established between the first web browser and the server, and a second bi-directional channel may be established between the second web browser and the server, wherein the bi-directional signalling channel may be configured at the server to redirect incoming traffic by forwarding incoming messages from the first bi-directional channel to the second bi-directional channel. The first and second bi-directional channels may be implemented using any protocol, for example such as by using a Web Socket protocol.

The bi-directional signalling channel may also be implemented using first and second uni-directional signalling channels. The first uni-directional channel may be established at the server, and the corresponding first unique identifier may be created, and at least temporarily stored at the server. Thereafter, the first unique identifier may be transferred to the second web browser. The second uni-directional channel may then be established at the server upon browsing to the first unique identifier using the second web browser creating a second unique identifier. The bi-directional signalling channel may be established by pairing the first unique identifier identifying the first uni-directional channel with the second unique identifier identifying the second uni-directional channel. In one embodiment, each of the uni-directional channels may comprise a FIFO channel.

The unique identifier may be provided to the second user in the form of a URL. The URL may contain the unique identifier, or the URL may embed an encrypted version of the unique identifier.

The transfer transferring the first unique identifier to the second user may be performed by any known means, such as using electronic mail, SMS, IM, chats, voice communication, notes, or any other transfer, electronically or otherwise. Typically, it will be the responsibility of the first user to ensure that the unique identifier is not revealed to others, or eavesdropped, during transfer of the unique identifier from the first user to the second user. In such a case where the unique identifier is revealed to others or is eavesdropped, this will have effect only for the specific connection or session.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

### BRIEF DESCRIPTION OF THE DRAWINGS

The above and other aspects will be apparent and elucidated from the embodiments described with reference to the drawing in which:
Fig. 1 shows a schematic block diagram of an embodiment of a web system for facilitating anonymous communication between two users.
Fig. 2 shows a schematic flow chart of a method facilitating anonymous communication between two users.
Fig. 3 shows a schematic block diagram of another embodiment of a web system for facilitating anonymous communication between two users.
Fig. 4 shows a schematic flow chart of another method of facilitating anonymous communication between two users.

### DETAILED DESCRIPTION

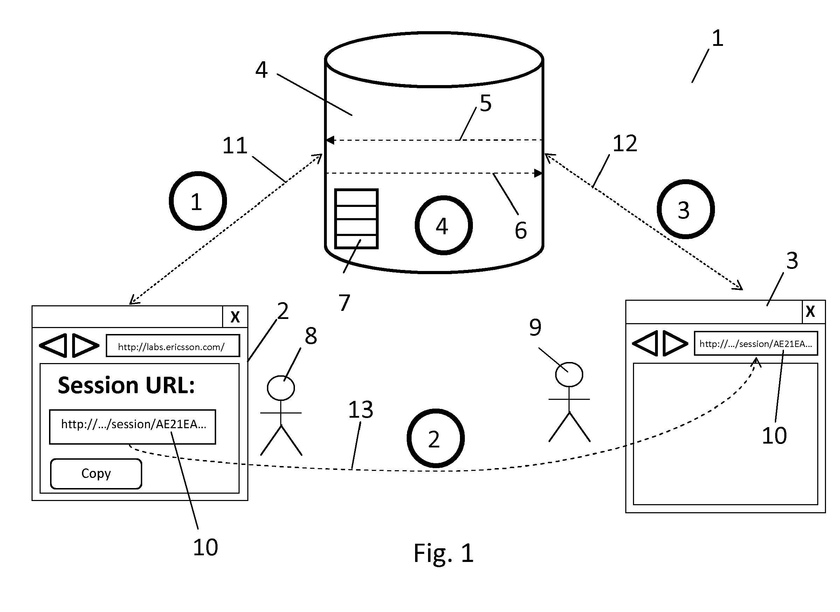

Fig. 1 shows a schematic block diagram of an exemplary web system 1 configured to perform the steps of the method for facilitating anonymous audio and video communication. The web based system 1 comprises a first web browser 2 facilitating audio and video communication and a second web browser 3 facilitating audio and video communication, and comprises furthermore a server 4 configured to create one or more signalling channel(s) 5, 6 and to temporarily store one or more corresponding unique identifier(s) 8 of the signalling channel(s) in a server storage 7. Hereby, a first user 8 using the first web browser 2 and a second user 9 using the second browser 3 may communicate anonymously via the signalling channel(s) 5, 6 by using the unique identifier(s) 10 of the signalling channel(s) 5, 6 in the respective web browsers 2, 3.

The server is connected to the first web browser 2 via a first bi-directional channel 11 and the server is connected to the second web browser 3 via a second bi-directional channel 12, for example via the internet. The link 13 between the first web browser and the second web browser is established by the first user 8 providing the unique identifier 10 in the first web browser 2 to the second user 9 for entering in the second web browser 3, for example by sending an SMS via a mobile phone.

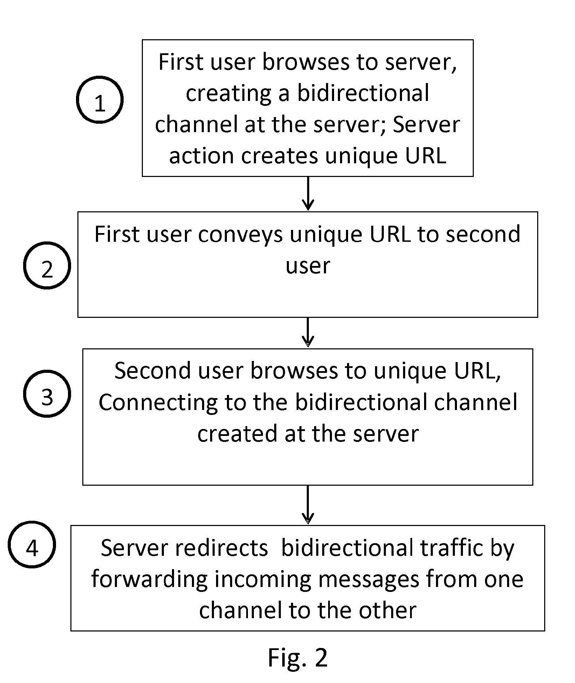

Fig. 2 shows a flow chart of a method facilitating anonymous communication between two users using for example a web system 1 as shown in Fig. 1. In step 1, the first user 8 browses to the server 4, thereby creating a first bi-directional channel 11 to the server and a bi-directional channel 5, 6 at the server. This server action creates a unique identifier 10, such as a unique URL, which is shown in the first web browser 2. In step 2 of the flow chart, the unique URL 10 is conveyed to the second user 9. In step 3, the second user browses to the unique URL, connecting to the bi-directional signalling channel created at the server 3. The server 3 redirects bi-directional traffic by forwarding incoming messages from one channel to another. Alternatively or intermediately, a first bi-directional channel may be formed between the first web browser 2 and the server 4, and a second bi-directional channel may be formed between the second web browser 3 and the server 4, the one and the other bi-directional channel being connected via the unique URL 10. Typically, the first and second bi-directional channels may be implemented using a Web Socket protocol.

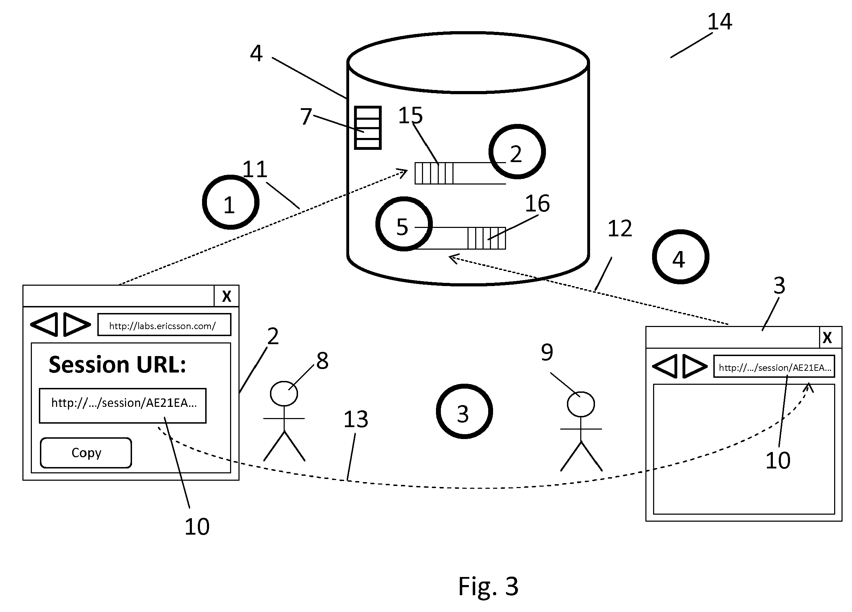

Fig. 3 shows a schematic block diagram of another exemplary web system 14 configured to perform the steps of the method for facilitating anonymous audio and video communication. The same reference numerals reference the same features as in Fig. 1. In this exemplary embodiment, the server creates a first uni-directional channel implemented by FIFO 15, and the server creates a second FIFO 16 when the second user 9 browses to the unique URL 10 received from the first user 8, and a corresponding second unique identifier.

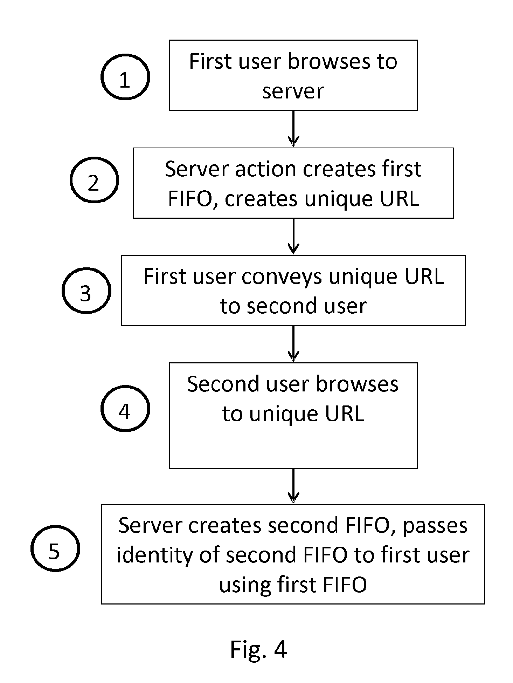

In Fig. 4, a flow chart of a method facilitating anonymous communication between two users using for example a web system 14 as shown in Fig. 3. In step 1, the first user 8 browses to the server 4. In step 2, the server creates a first FIFO 15 and assigns a unique identifier 10, such as a unique URL. The first user 8 conveys the unique URL 10 to the second user 9, in any manner (step three). In step four, the second user 9 browses to the unique URL 10 using the second web browser 3, and the server 4 creates the second FIFO 16 in step five, creates a second unique identifier (not shown) for the second FIFO and passes the identity of the second FIFO 16, i.e. the second unique identifier (not shown) to the first user 8 using the first FIFO 15 to thereby establish a bi-directional channel between the first web browser 2 and the second web browser 3.

## Claims

1. A method for facilitating anonymous audio and video communication between a first user using a first web browser (2) and a second user using a second web browser (3) via a server (4), the method comprising
- providing the first web browser (2) for browsing to the server (4)
- establishing a first uni-directional signalling channel (5, 6, 15, 16) at the server (4),
- creating a first unique identifier (10) for the first uni-directional signalling channel (5, 6, 15, 16),
- storing at least temporarily the first unique identifier (10) at the server (4),
- transferring the first unique identifier (10) to the second user (9),
wherein
- a second uni-directional signaling channel (16) is established at the server upon browsing to the first unique identifier (10) using the second web browser (3) and a second unique identifier is created for the second uni-directional signalling chalnnel; and
- a bi-directional signalling channel (15, 16) is established by pairing the first unique identifier (10) identifying the first uni-directional signalling channel (15) with the second unique identifier identifying the second uni-directional signalling channel (16), whereby an anonymous connection is established between the first web browser (2) and the second web browser (3).

2. A method according to claim 1, wherein at least the first or the second uni-directional signalling channel (15, 16) is identified arbitrarily by assigning a respective universally unique identifier, UUID, or a respective random number.

3. A method according to claim 1, wherein each of the uni-directional signalling channels (15, 16) comprises a First In First Out, FIFO, channel.

4. A method according to any of the previous claims, wherein the first web browser (2) and the second web browser (3) facilitate voice and video communication using an out-of-band signalling channel.

5. A method according to claim 4, wherein the out-of-band signalling channel is implementing a Real Time Communication, RTC, -Web standard.

6. A method according to any of the previous claims, wherein the first unique identifier (10) is provided to the second user in the form of a Uniform Resource Locator, URL.

7. A method according to any of the previous claims, wherein the transfer transferring the first unique identifier (10) to the second user is performed by one of the following means:
- electronic mail;
- Short Message Service, SMS;
- Instant Messaging, IM;
- chats;
- voice communication; or
- notes.

8. A web based system comprising:
- a first web browser (2) facilitating audio and video communication,
- a second web browser (3) facilitating audio and video communication,
- a server (4) configured to create at least one bi-directional signalling channel (5, 6, 15, 16) and to temporarily store at least one corresponding unique identifier (10),
so that a first user using the first web browser (2) and a second user using the second browser (3) may communicate anonymously via the bi-directional signalling channel (5, 6, 15, 16) by using the unique identifier (1) in their respective web browsers, **characterized in that** the server is further arranged to implement the bi-directional signalling channel using first and second uni-directional signalling channels (15, 16) such that:
- the first uni-directional signalling channel (15) is established at the server (4), and a corresponding first unique identifier (10) is created, at least temporarily stored at the server, and transferred to the second web browser (3);
- the second uni-directional signalling channel (16) is established at the server upon browsing to the first unique identifier (10) using the second web browser (3) and a second unique identifier is created; and
- the server is configured to establish the bi-directional signalling channel (15, 16) by pairing the first unique identifier (10) identifying the first uni-directional signalling channel (15) with the second unique identifier identifying the second uni-directional signalling channel (16).

## Patentansprüche

1. Verfahren zum Ermöglichen von anonymer Audio- und Videokommunikation über einen Server (4) zwischen einem ersten Benutzer, der einen ersten Webbrowser (2) verwendet, und einem zweiten Benutzer, der einen zweiten Webbrowser (3) verwendet, wobei das Verfahren umfasst:
- Bereitstellen des ersten Webbrowsers (2) zum Navigieren zum Server (4),
- Aufbauen eines ersten unidirektionalen Signalisierungskanals (5, 6, 15, 16) am Server (4),
- Erstellen einer ersten eindeutigen Kennung (10) für den ersten unidirektionalen Signalisierungskanal (5, 6, 15, 16),
- wenigstens temporäres Speichern der ersten eindeutigen Kennung (10) am Server (4),
- Übertragen der ersten eindeutigen Kennung (10) an den zweiten Benutzer (9),
wobei
- bei Navigieren zur ersten eindeutigen Kennung (10) unter Verwendung des zweiten Webbrowsers (3) ein zweiter unidirektionaler Signalisierungskanal (16) am Server aufgebaut wird, und eine zweite eindeutige Kennung für den zweiten unidirektionalen Signalisierungskanal erstellt wird; und
- durch Paaren der ersten eindeutigen Kennung (10), die den ersten unidirektionalen Signalisierungskanal (15) identifiziert, mit der zweiten eindeutigen Kennung, die den zweiten unidirektionalen Signalisierungskanal (16) identifiziert, ein bidirektionaler Signalisierungskanal (15, 16) aufgebaut wird, wodurch eine anonyme Verbindung zwischen dem ersten Webbrowser (2) und dem zweiten Webbrowser (3) hergestellt wird.

2. Verfahren nach Anspruch 1, wobei wenigstens der erste oder der zweite unidirektionale Signalisierungskanal (15, 16) durch Zuordnen einer jeweiligen universellen eindeutigen Kennung, UUID, oder einer jeweiligen Zufallszahl willkürlich identifiziert wird.

3. Verfahren nach Anspruch 1, wobei jeder der unidirektionalen Signalisierungskanäle (15, 16) einen First-In-First-Out, FIFO,-Kanal umfasst.

4. Verfahren nach einem der vorhergehenden Ansprüche, wobei der erste Webbrowser (2) und der zweite Webbrowser (3) Sprach- und Videokommunikation unter Verwendung eines Außerband-Signalisierungskanals ermöglichen.

5. Verfahren nach Anspruch 4, wobei der Außerband-Signalisierungskanal einen Echtzeitkommunikations, RTC,-Web-Standard implementiert.

6. Verfahren nach einem der vorhergehenden Ansprüche, wobei die erste eindeutige Kennung (10) in Form einer URL (Uniform Resource Locator) für den zweiten Benutzer bereitgestellt wird.

7. Verfahren nach einem der vorhergehenden Ansprüche, wobei die Übertragung, welche die erste eindeutige Kennung (10) an den zweiten Benutzer überträgt, durch eines der folgenden Mittel durchgeführt wird:
- E-Mail;
- Kurznachrichtendienst, SMS;
- Sofortnachrichtenübermittlung, IM;
- Chats;
- Sprachkommunikation; oder
- Notizen.

8. Webbasiertes System, umfassend:
- einen ersten Webbrowser (2), der Audio- und Videokommunikation ermöglicht,
- einen zweiten Webbrowser (3), der Audio- und Videokommunikation ermöglicht,
- einen Server (4), der so konfiguriert ist, dass er mindestens einen bidirektionalen Signalisierungskanal (5, 6, 15, 16) erzeugt und mindestens eine entsprechende eindeutige Kennung (10) temporär speichert, so dass ein erster Benutzer, der den ersten Webbrowser (2) verwendet, und ein zweiter Benutzer, der den zweiten Webbrowser (3) verwendet, über den bidirektionalen Signalisierungskanal (5, 6, 15, 16) durch Verwenden (10) ihrer jeweiligen Webbrowser anonym miteinander kommunizieren können,
**dadurch gekennzeichnet, dass** der Server ferner so ausgelegt ist, dass er den bidirektionalen Signalisierungskanal unter Verwendung von ersten und zweiten unidirektionalen Signalisierungskanälen (15, 16) implementiert, derart dass:
- der erste unidirektionale Signalisierungskanal (15) am Server aufgebaut wird (4), und eine entsprechende erste eindeutige Kennung (10) erstellt wird, wenigstens temporär am Server gespeichert und an den zweiten Webbrowser (3) übertragen wird;
- der zweite unidirektionale Signalisierungskanal (16) am Server bei Navigieren zur ersten eindeutigen Kennung (10) unter Verwendung des zweiten Webbrowsers (3) aufgebaut wird, und eine zweite eindeutige Kennung erstellt wird; und
- der Server so konfiguriert ist, dass er den bidirektionalen Signalisierungskanal (15, 16) durch Paaren der ersten eindeutigen Kennung (10), die den ersten unidirektionalen Signalisierungskanal (15) identifiziert, mit der zweiten eindeutigen Kennung aufbaut, die den zweiten unidirektionalen Signalisierungskanal (16) identifiziert.

## Revendications

1. Procédé pour faciliter une communication audio et vidéo anonyme entre un premier utilisateur utilisant un premier navigateur Web (2) et un deuxième utilisateur utilisant un deuxième navigateur Web (3) par l'intermédiaire d'un serveur (4), le procédé comprenant :
- la fourniture du premier navigateur Web (2) pour naviguer jusqu'au serveur (4),
- l'établissement d'un premier canal de signalisation unidirectionnelle (5, 6, 15, 16) au serveur (4),
- la création d'un premier identifiant unique (10) pour le premier canal de signalisation unidirectionnelle (5, 6, 15, 16),
- la mémorisation au moins provisoire du premier identifiant unique (10) au serveur (4),
- le transfert du premier identifiant unique (10) au deuxième utilisateur (9),
dans lequel
- un deuxième canal de signalisation unidirectionnelle (16) est établi au serveur lors de la navigation jusqu'au premier identifiant unique (10) en utilisant le deuxième navigateur Web (3) et un deuxième identifiant unique est créé pour le deuxième canal de signalisation unidirectionnelle, et
- un canal de signalisation bidirectionnelle (15, 16) est établi par l'appariement du premier identifiant unique (10) identifiant le premier canal de signalisation unidirectionnelle (15) avec le deuxième identifiant unique identifiant le deuxième canal de signalisation unidirectionnelle (16), de telle manière qu'une connexion anonyme soit établie entre le premier navigateur Web (2) et le deuxième navigateur Web (3).

2. Procédé selon la revendication 1, dans lequel au moins le premier ou deuxième canal de signalisation unidirectionnelle (15, 16) est identifié arbitrairement par l'assignation d'un identifiant universellement unique, UUID, respectif ou d'un numéro aléatoire respectif.

3. Procédé selon la revendication 1, dans lequel chacun des canaux de signalisation unidirectionnelle (15, 16) comprend un canal premier entré premier sorti, FIFO.

4. Procédé selon l'une quelconque des revendications précédentes, dans lequel le premier navigateur Web (2) et le deuxième navigateur Web (3) facilitent une communication audio et vidéo en utilisant un canal de signalisation hors bande.

5. Procédé selon la revendication 4, dans lequel le canal de signalisation hors bande met en oeuvre une norme de communication en temps réel, RTC, sur le Web.

6. Procédé selon l'une quelconque des revendications précédentes, dans lequel le premier identifiant unique (10) est fourni au deuxième utilisateur sous la forme d'un localisateur de ressource uniforme, URL.

7. Procédé selon l'une quelconque des revendications précédentes, dans lequel le transfert transférant le premier identifiant unique (10) au deuxième utilisateur est effectué par l'un des moyens suivants :
- messagerie électronique ;
- service de messages courts, SMS ;
- messagerie instantanée, IM ;
- chats ;
- communication vocale ; ou
- notes.

8. Système basé sur le Web comprenant :
- un premier navigateur Web (2) facilitant une communication audio et vidéo,
- un deuxième navigateur Web (3) facilitant une communication audio et vidéo,
- un serveur (4) configuré pour créer au moins un canal de signalisation bidirectionnelle (5, 6, 15, 16) et mémoriser provisoirement au moins un identifiant unique correspondant (10), de sorte qu'un premier utilisateur utilisant le premier navigateur Web (2) et un deuxième utilisateur utilisant le deuxième navigateur Web (3) puissent communiquer de manière anonyme par l'intermédiaire du canal de signalisation bidirectionnelle (5, 6, 15, 16) par l'utilisation de l'identifiant unique (10) dans leurs navigateurs Web respectifs,
**caractérisé en ce que** le serveur est en outre agencé pour mettre en oeuvre le canal de signalisation bidirectionnelle en utilisant des premier et deuxième canaux de signalisation unidirectionnelle (15, 16) de sorte que :
- le premier canal de signalisation unidirectionnelle (15) est établi au serveur (4) et un premier identifiant unique correspondant (10) est créé, au moins provisoirement mémorisé au serveur, et transféré au deuxième navigateur Web (3) ;
- le deuxième canal de signalisation unidirectionnelle (16) est établi au serveur lors de la navigation jusqu'au premier identifiant unique (10) en utilisant le deuxième navigateur Web (3) et un deuxième identifiant unique est créé ; et
- le serveur est configuré pour établir le canal de signalisation bidirectionnelle (15, 16) par l'appariement du premier identifiant unique (10) identifiant le premier canal de signalisation unidirectionnelle (15) avec le deuxième identifiant unique identifiant le deuxième canal de signalisation unidirectionnelle (16).
